# EUROPEAN PATENT SPECIFICATION

(11) **EP 0 789 991 B1**
(45) Date of publication and mention of the grant of the patent: **15.05.2002**
(21) Application number: 97200276.0
(22) Date of filing: 04.02.1997
(51) Int. Cl.: A01F 15/00, A01F 25/14

(54) **A machine for wrapping bales**
Umhüllmaschine für Ballen
Machine pour envelopper des balles

(30) Priority: 16.02.1996 NL 1002367
(43) Date of publication of application: 20.08.1997
(73) Proprietor: MAASLAND N.V., 3155 PD Maasland (NL)
(72) Inventor: van der Lely, Olaf, 6312 Steinhausen (CH)
(74) Representative: Corten, Maurice Jean F.M.

(56) References cited:
- CH-A- 432 924
- DE-A- 3 304 374
- DE-A- 3 306 586
- DE-A- 3 427 731
- US-A- 2 379 371
- US-A- 3 584 428

## Description

The present invention relates to a machine for wrapping bales, such as grass, straw or hay bales, said machine being provided with means for placing a bale into a container or onto a container part.

The present invention further relates to a method of wrapping bales, such as grass, straw or hay bales, in which by means of positioning means a cover part of a container is put around the bale and a bottom part, whereafter the container is discharged from the machine via a discharge member.

Such a machine, container and method are known from US-A-3,584,428. Herein it is described that batches of fresh-chopped silage are compacted into bale form, preferably on a pallet. The bale is covered and sealed with a protective cover to prevent spoilage. The compaction, palleting and covering are carried out by a mobile machine which is also adapted to cut and chop the crop as the machine moves over a field.

The present invention aims at obtaining an alternative machine and method with which the wrapping of bales can eventually be executed more cheaply, that wrapped bales are transportable without running the risk of being easily damaged during transport and that the logistical handling of wrapped bales is optimal.

According to the invention this is achieved in one aspect by providing a machine for wrapping bales according to claim 1.

According to the invention this is achieved in a second aspect by providing a method of wrapping bales according to claim 37.

Preferably the invention relates to a method in which, by means of a self-driving machine, bales are picked up from the field during driving, are wrapped in the machine during driving and are laid down on the field during driving, whereby stacks of wrapping elements are transported in the machine and are taken out of the stack during driving by means of an unstacking device and are displaced into a wrapping space for the purpose of wrapping a bale.

The invention further relates to a bale container according to claim 21. This has the advantage that a bale can be protected in a favourable manner against the weather and animals, while the wrapping is easy to handle without the risk of being damaged during transport or during any other way of handling. In a further particular embodiment, the bottom part of a container comprises transversely provided openings suitable to include the forks of a so-called forklift. This has the advantage of a simple handling while the risk of damage of the container is rather small.

The machine according to the present invention has the additional advantage that positioning of a bale on a bottom part or in a container or a part thereof can be realized in a controllable manner.

In the method, the container and the machine described, it is of advantage for the quality of the baled crop that a bale, because of the container by which it is surrounded, is accommodated in an airtight space.

For a better understanding of the invention and to show how the same may be carried into effect, reference will now be made, by way of example, to the accompanying drawings, in which:
Figure 1 shows, in side view, the machine according to the invention;
Figure 2 is a cross-section taken on the line II - II in Figure 1;
Figure 3 is a plan view according to the arrow III in Figure 1;
Figure 4 is a cross-section according to the line IV - IV in Figure 2, and
Figure 5 is a cross-section according to the line V - V in Figure 2.

Corresponding elements in the drawings are indicated by the same reference numerals. Besides, the invention is by no means restricted to the embodiments shown and described; they only serve to illustrate the inventive idea.

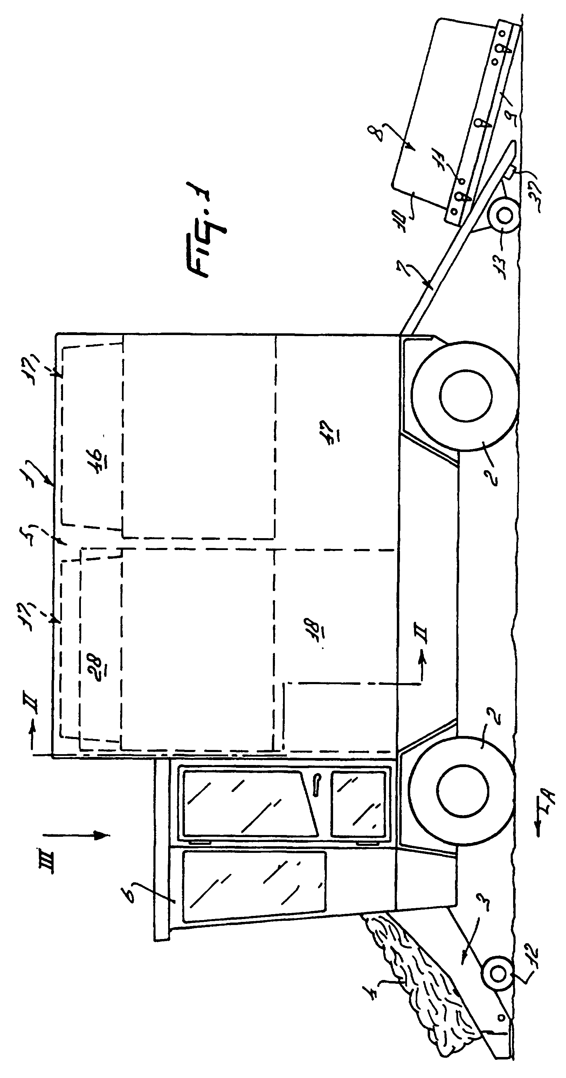

Figure 1 shows in side view the wrapping machine according to the invention, which wrapping machine, in the present embodiment, is a self-driving one. The machine is particularly suitable for picking up and wrapping bales of crop, such as straw or hay, lying on the field. More in particular the machine is attuned to rectangular bales. The machine is provided with wheels 2, a driver's cabin 6, a pick-up element 3 on which in the figure a bale 4 is drawn, a processing space 5 and a discharge member 7, on which in the figure there is drawn a wrapping 8, more specifically to be designated as a container 8. In accordance with the invention, the container 8 comprises at least one part made of solid material, which part may be covered with or be disposed on a second part, which may be made of a solid material as well as of a flexible material, and may be constituted e.g. by a case fitting to the first part so as to close same off.

A container 8 consists of a bottom part 9 and a cover part 10. In an alternative embodiment, between the bottom part 9 and the cover part 10 there is arranged an intermediate part constituted by a wall surrounding the bale and fitting to the bottom part 9. Both the pick-up member 3 and the discharge member 7 are connected freely pivotably with the machine during operation and are provided with a pair of supporting wheels 12, 13 respectively for the purpose of following the ground. The supporting wheels 12, 13 may also be disposed near the free end of the pick-up member 3, respectively the discharge member 7, and may be designed so as to be pivotable. With the aid of a non-shown operating element the pick-up member 3 and the discharge member 7 can be pivoted into a substantially upwardly directed transport position.

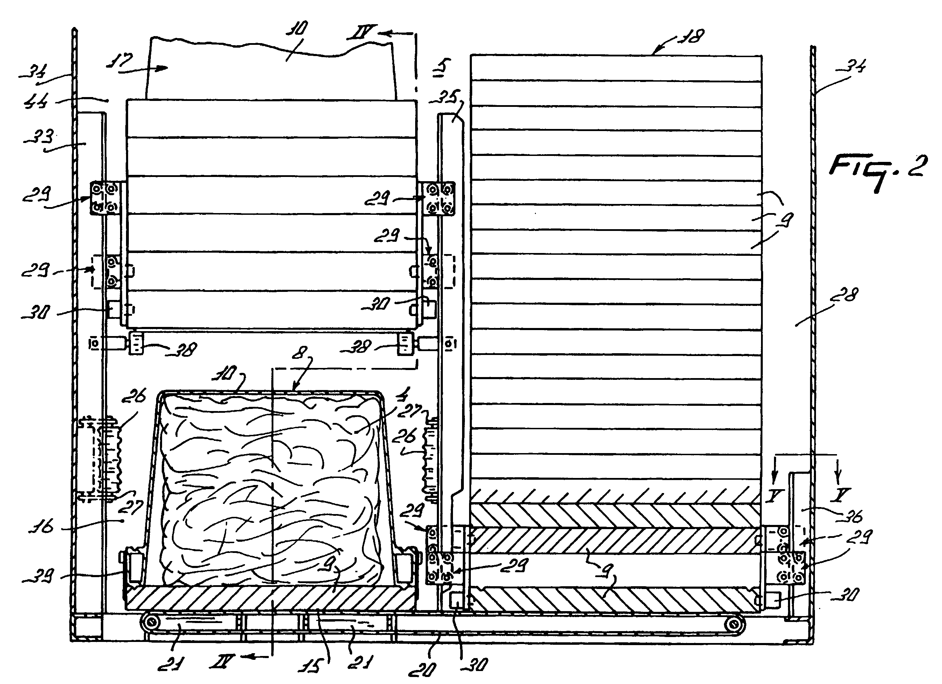

Figure 2 is a cross-section according to the line II - II in Figure 1 and shows, in line with the pick-up member 3, a passage and wrapping space 16 and a passage 19 which constitutes at the same time a finishing space. In the wrapping space 16 there is shown a bale 4 wrapped in a container 8. At its rear side the machine comprises a discharge member 7 which is connected to the passage. Because of this, in the process of picking up, processing and discharging, a bale 4 can be guided in a straight line through the machine. Above the wrapping space 16, there is available in the processing space 5 a stacking space 44 including a first stack 17 of cover parts 10. Via gripping members 29 the stack 17 is kept at a small level above a container 8 possibly present in the wrapping space 16. In the embodiment shown, the gripping members 29 are movable along vertically extending guide means 33, 35, arranged at the side of the wrapping space 16 and designed in the present embodiment as a T-profile. The gripping members 29 comprise an electromagnetically controllable gripping element 30, here constituted by a stop pin, by means of which a gripping member 29 can seize a cover part 10. To that end the cover parts 10 are provided with fitting recesses 11. Under automatic control the gripping members 29 are movable upwards and downwards along the guide means 33, 35. In the present embodiment, this is realized in a non-shown manner with the aid of hydraulic control elements disposed in the machine, which control elements, via a flexible connecting element such as a cable, are connected with a gripping member 29. In accordance with the invention, such a movability can be realized by means of an electronic or pneumatic control unit or motor, either or not engaging directly the gripping member 29 or closely driving the roller 32 thereof, while moving the gripping member 29, either or not via e.g. a gear rack mechanism, upwards and downwards along a guide means 33, 35.

In the wrapping space 16, which is sufficiently large for surrounding a container 8, at some height above the bottom of the wrapping space 16, but substantially within the height of a bale 4 placed on a bottom part 9, along the upright longitudinal sides of said space, there is furthermore arranged a driven continuous transport element 26. The transport elements 26 are pivotable into and out of an operative position via parallelogram arms 27 engaged in the present embodiment by a non-shown control element, in this case a hydraulic cylinder. In their operative position the transport elements 26 are pivoted in such a way that, at least with a foremost part, they abut against an upright side wall of a bale 4 supplied by the pick-up element 3. The continuous transport elements 26 are suitable to engage the side walls of a bale 4, such that the latter, after having been moved upwards by the pick-up member 3, can be engaged by the continuous transport elements 26 together in order to be displaced further in the wrapping space 16. A bale 4, released by pivoting out of the operative position of the transport elements 26, gets into the wrapping space 16 on a bottom part 9 which, via a pair of motor-driven continuous conveyors 20, is supplied from a stacking space 28 for a stack of bottom parts 18, which stacking space 28 is available in the processing space 5 next to the wrapping space 16. The height of the stacking space 28 corresponds to the height of the processing space 5, and consequently to the collective height of the wrapping space 16 and the stacking space 44 for the stack of cover parts 17. The volume of a stacking space for cover parts 10 or bottom parts 9 corresponds to the volume of a cover or bottom part increased by the room required for the gripping members 29 arranged at a side of the elements. The stacking space 28 is provided, in an equal manner, with gripping members 29 and with identical guide means 36 which, however, are shorter here, while the guide means 35 is used in the stacking space 28 together with the gripping members 29. The bottom of the wrapping space 16 is constituted by a pair of driven continuous transport elements 21, orientated in longitudinal direction, and of a pair of identical transport elements 20 which, however, are orientated transversely and extend into the adjacent stacking space 28. The bottom of the finishing space 19 is constituted by an identical pair of transport elements 22, orientated in longitudinal direction and extending partially into the wrapping space 16. The passages 16, 19 are confined at their upper sides by stacking spaces 44, 45 respectively for cover parts 10. Above the wrapping space 16 there is provided a first stack of cover parts 17 and above the finishing space 19, in the stacking space 45, there is available a second stack of cover parts 17. Behind the stacking space 28 the processing space 5 comprises a space 47 which, in a specific embodiment, is used as a buffer space for wrappings 8 to be discharged. Above the space 19 there is available a stacking space 46 for a third stack of cover parts 17. In the present embodiment of the machine, a stack 17 comprises ten cover parts 10, while the stack 18 comprises thirty bottom parts 9.

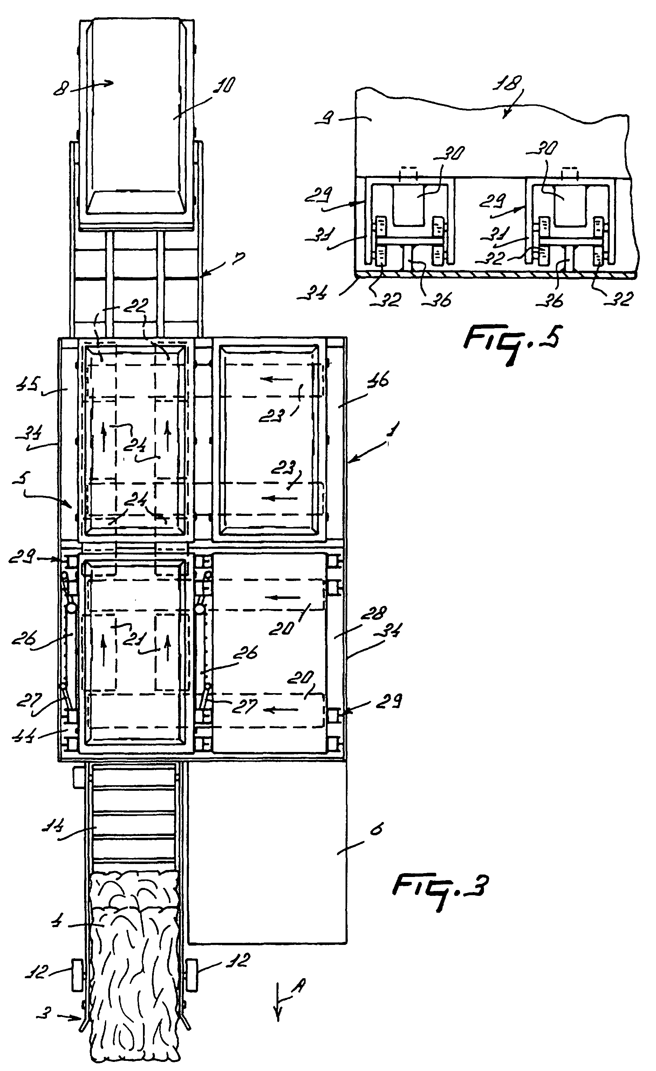

Figure 3 is a plan view according to the arrow III in Figure 1 and shows a motor 11, in this case designed as a hydraulic motor, of the pick-up member 3. Said motor 11 serves for driving a continuous transport element 14, here constituted by a rubber conveyor. In a preferred embodiment, the transport element 14 is provided with short projections which, by hooking on, facilitate the picking-up of a bale 4 from the ground. The bottom of the stacking space 45, 46 is constituted by motor-driven continuous transport elements 23, which are disposed transversely and reach into the space for the second stack 17. The bottom of the stacking space 46 also comprises a pair of identical transport elements 24, which are however orientated in the longitudinal direction of the machine, for transporting a stack of cover parts 17 to the stacking space 44 above the wrapping space 16.

In the present embodiment, the discharge member 7 is constituted by a guide chute. In accordance with the invention, the discharge member 7 may be provided with a stop element 37, by means of which a container 8 is kept in the machine until a next container 8 is about to be passed to the discharge member 7. By using the stop element 37 the containers 8 can be laid down on the ground in pairs in the vicinity of each other.

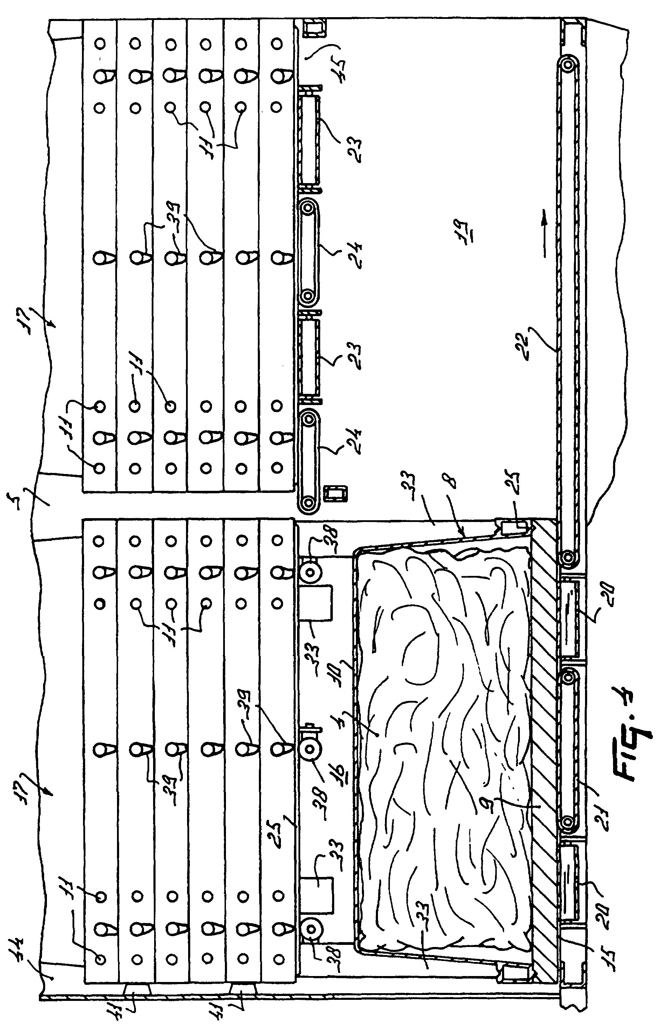

Figure 4 shows in a cross-section taken on the line IV - IV in Figure 2 the above-described transverse and longitudinal transport elements 23 and 24. Therebelow, in line with the bottom of the wrapping space 16, there is disposed the pair of transport elements 22 for the discharge of a container 8.

In line with the transport elements 24, above the wrapping space 16, there are arranged three pairs of guide means 38 including freely rotatable rollers 39. By means of a (non-shown) control element such as a hydraulic cylinder, the guide means 38 are pivotable in downward direction into a vertical position about a pivot shaft orientated in the direction of travel A. In a preferred embodiment, at least one of at least one pair of guide means 38, preferably that in the middle, is designed as a motor-driven one.

Figure 5 shows in detail in side view according to the cross-section V - V in Figure 2 a possible design of a gripping member 29. In the embodiment shown, the gripping member 29 comprises a U-profile 31, in the basic part of which there is provided an aperture through which the pin of the electromagnetic gripping element 30 is movable. Hereby the element 30 is fastened to the basic part of the U-profile. Against each of the side pieces of the U-profile there is arranged at least one pair of freely rotatable rollers 32. Between the rollers of a pair of rollers 32, a guide strip of a guide means 33, designed as a T-profile and connected in the figure with the wall 34 of the processing space 5, extends vertically and parallel to the wall of the processing space 5. The element 30 may be provided at the height of the rollers 32 so as to extend partly therebetween against the base of the U-profile. The element 30 may also be provided at some distance under the rollers 32 against a projection of the base.

Furthermore the machine is provided at different places with sensors, such as light sensitive sensors, by means of which the interruption of a beam of light is detected. However, according to the invention, by sensors are also meant e.g. mechanical and electromechanical detectors or electromechanical switches. The sensors, insofar as they are not designed as mechanical ones, are included in a control system, here designed as an electronic one, for controlling and co-ordinating of the wrapping device, the pick-up member 3 and the discharge member 7 of the machine, described for the greater part in the foregoing, and the supply of stacks of wrapping parts 17. In the present embodiment, the control system comprises an electronically operated hydraulic sequence switch system for activating groups of gripping members 29 constituting together an unstacking device. The wrapping device mentioned comprises at least the transport elements 14, 20, 21, the gripping members 29 and the guide means 33, 35, i.e. the machine parts required, the positioning and the discharge of a bale 4, wrapping parts 9, 10, respectively a container 8, as well as possible connecting members for interconnecting the wrapping parts 9, 10.

In the present embodiment, a bottom part 9 is produced substantially as a flat one, having in a specific embodiment a thickness or height of more than 10 cm. Moreover, in a specific embodiment, said bottom part is produced such that in the transverse direction there are slots for the forks of a so-called forklift. The dimensions of the width and the length of a bottom part 9 may be produced in dependence of the size of the bale, increased by a fitting edge suitable to fit to a cover part 10. The fitting edges are provided with a V-shaped groove which, for centring the cover part, cooperates with a V-shaped knife-like element at the bottom of an edge 25 of the cover part 10. Near its upper end a cover part 10 has the size of the bale 4 to be wrapped and has also a height corresponding to that of the bale to be wrapped. The upright walls spread out somewhat in downward direction in order to allow the cover part to be disposed more easily. The edge 25 extends parallel to the fitting edge of a bottom part 9. In the preferred embodiment shown, the edge 25 comprises an upright edge portion at the outer circumference of the cover part. At the longitudinal sides of the cover part 10, in the upright edge portion near each corner, there are provided recesses 11 for the purpose of a possible engagement of the container part by means of stop pins 30. In the embodiment shown, the edge 25 comprises, parallel to the lower edge portion and fitting to the upright edge portion, a second, horizontally extending edge portion which is connected with the upright wall of the cover and comprises at its upper side a V-shaped groove. The thus created box-like profile of the edge 25 confers an optimal sturdiness to the cover part, prevents stacked cover parts 10 from sticking to each other and offers a proper and durable possibility of engagement. To the edge 25 there are disposed fastening elements constituted by elastic loops 39, which are capable of being hooked up to a bottom part 9.

In a non-shown embodiment, a container 8, in particular the cover part 10, is suitable for wrapping up at least two bales 4. For that purpose there is provided in the wrapping space 16 a transport element identical to the transport element 26 but extending in vertical direction. When a first bale has arrived in the space 16, said bale is moved upwards by means of the vertical transport device until there is created room for accommodating a second bale 4 in the wrapping room. The first bale, during its upward movement, will disappear at least partially in a lower cover part 10 of the stack 17. After the second bale 4 has been positioned, the first bale is let down thereon and, in the described manner, the stack of two bales is wrapped further.

The wrapping parts 9 and 10 are made of such a material and the sealing of the container is such that a wrapped bale 4 is protected against the weather and animals, also when a container is left on the field without the parts thereof being interconnected.

The function of the construction will be explained in what follows.

During operation the machine moves in the direction of travel A in such a way that the pick-up member 3 is positioned in front of a bale 4 lying on the ground. After having come into contact with the continuous transport element 14, the bale is picked up by the pick-up member 3 during driving of the machine and is transported in the direction of the wrapping space 16. Hereby the bale 4 is forced by a guide means constituting part of the pick-up member 3, e.g. an upright wall, in such a position that the longitudinal direction of the bale 4 and that of the machine correspond to each other. As soon as the bale 4 has advanced sufficiently far in the wrapping space 16, which is established by means of a sensor, e.g. a light sensitive element directed transversely to the longitudinal direction of the passage 16, 19 and arranged near the supply opening of the wrapping space 16, the transport elements 26 swing out inwardly to such an extent that they abut to the picked-up bale 4 and the latter is put in a more advanced position in the wrapping space. The bale 4 is conveyed by means of the transport elements 26 until it has arrived at the desired position, which is also automatically established by means of a sensor. After transport has been stopped by means of the elements 26, said elements are automatically pivoted back into their inoperative position, shown in the figures, and the bale 4 has reached its definite position on a bottom part 9 already present in the wrapping space 16. To that end the bottom part 9 is placed in an early stage in the wrapping space 16 by means of the transversely orientated conveyors 20.

A bottom part 9 is separated from the stack 18 and placed on the conveyor 20 by means of two groups of four gripping members 29, whose movements are activated e.g. by an electronically or hydraulically operated sequence switch system. A first group of four gripping members 29 is thereby active in the lower range of the stack 18 and engages the bottom parts 9, near the corners thereof, in the recesses 11 provided in the upright longitudinal walls of the bottom part 9. A second group of four gripping members 29 engages recesses 11 provided closer to the centre and is active in an upper range of the stack 18. During unstacking the second lowest bottom part 9 of the stack 18 is kept at some distance above the conveyors 20 by means of the second group of gripping members 29, and the lowest bottom part 9, which has been seized by the first group of gripping members 29, is moved unto nearly the transverse transport elements 20. Hereafter the lowest bottom part is released from the gripping members 29 by automatic control of the electromagnetic gripping elements 30, whereby in the present embodiment the stop pins are pulled out of the recesses 11 in the bottom part 9. Then the four gripping members 29 of the first group move together to a position at the height of the bottom part 9 which, at that moment, is still being seized by the second group of gripping members 29. After automatic detection of said position by means of a non-shown detection element or sensor, the transport elements 20 are put into operation for transport of the laid down bottom part 9 to the wrapping space 16. The detection also results in that the four gripping members 29 active in the upper range move the stack of bottom parts 18 over the height of one bottom part in downward direction, whereafter the bottom part 9, which has then taken the undermost position, is seized by the group of gripping members 29 active in the lower range. The four gripping members 29 operative in the upper range are subsequently disconnected from the bottom part 9 then being the undermost one and moved upwards over the height of one bottom part and then automatically seize the bottom part 9 then being the second lowermost one. From this moment the sequence switch system or unstacking switch system described in the foregoing repeats as soon as it is activated to do so by e.g. the control system of the machine. This happens automatically when the container 8 is moved out of the wrapping space 16 in rearward direction, which is automatically detected by means of the sensor available near the rear side of the wrapping space 16, which sensor also establishes that a picked-up bale 4 has definitely arrived at the wrapping space.

Disposing a cover part 10 on a bottom part 9 takes place in a manner analogous to the above-described one for placing a bottom part 9 on a transport element 20. The device for unstacking the cover parts 10 differs in that the stroke of the group of gripping members 29 active in the lower range is considerably larger than that applied during unstacking the bottom parts 9 i.e. at least as large as the height of a container 8. The group of gripping members 29 active in the lower range here moves along the guide means 33 arranged closest to the ends of the cover parts. The gripping members 29 arranged near the inside of the machine move along guide means 35 which also serve as guide means for the bottom parts 9. For that purpose the gripping elements 30 of the group of gripping members 29 active in the lower range are each time disposed via a projection of the base of the U-profile at some distance below the pertinent rollers 32. At a downward movement for disposing a lowermost cover 10 of the stack 17 on a bottom part 9, these electromagnetic gripping elements 30 move between the rollers 32 of the inner gripping members 29 for the bottom parts 9. As soon as a cover part 10 has been disposed on a bottom part 9, i.e. when a bale 4 has been wrapped, the container 8 is transported automatically to the finishing space 19 by means of the transport elements 21 and 22, so that the wrapping space 16 is available for receiving a next bale 4.

In the finishing space 19 behind the wrapping space 16, the bottom and cover part 9, 10 of the container 8 are detachably interconnected with the aid of non-shown fastening means. In the present embodiment, this interconnection is carried out by means of elastic connecting elements 39, connected with the cover parts 10, which connecting elements 39, with the aid of said fastening means, are put around a hook-shaped part of the relevant bottom part 9. In an alternative embodiment, the machine comprises in this space fastening means, which forcefully push the cover part 10 against the bottom part in such a way that said parts are hooked into each other via so-called click-fastenings. To that end the container 8 may be provided with synthetic parts containing the click-fastening elements. However, it is preferred that the wrapping parts 9, 10 are made of synthetic material and the clicking parts constitute part of the material of the container 8.

After the container has been processed to a unit in the above-described manner, the transport elements 22 are automatically activated further to transport the container to the discharge member 7. The fact that a container 8 has been ejected and the transport elements 22 have been stopped automatically is again detected by means of a sensor arranged near the rear end of the finishing space 19. Once laid down on the discharge member 7, the container 8 slides downwards over a guide bottom, here constituted by two metal layers, and along upright guide walls. In a preferred embodiment of the machine, the discharge member 7 comprises an electromagnetically operated stop element 37, by means of which laying down on the field of the container 8 can be stopped until the moment when a next container 8 is ready to be discharged from the finishing space 19. After automatic dislocking of the stop element 37 the two containers are laid down immediately after each other, so as to arrive on the field close to each other. In again a further embodiment, transverse transport elements extend in the finishing space 19 for temporary storage of a finished container 8 in the adjacent space 47 under the stacking space 46 for the third stack of cover parts 17. This space may also be provided with longitudinal discharge transport elements which, in this embodiment, convey a container 8 to a second discharge member 7. In such an embodiment, according to a preferred setting, a maximum of each time four containers can be laid down on the field in each other's vicinity. It is noticed that said fastening means may also be provided in the wrapping space 16, in particular under the transport elements 26. Nevertheless, according to the invention, a ready container 8 may also be constituted by combined wrapping parts 9, 10 which, however, are not interconnected.

When the first stack of cover parts 17 has been used, which is detected by means of a sensor, all the stop pins of the relevant electromagnetic gripping elements 30 are automatically withdrawn and the guide means 38 pivot into an operative position in which their rollers can rotate about a horizontal shaft. Subsequently the control system activates the supplying transport elements 24, so that the second stack of cover parts 17 lying behind will get above the wrapping space 16. The forward speed transferred by the transport elements 24 to the second stack 17 results in that the stack 17 rolls on over the guide means 38 until the stops 41. In this position the rearmost end of the wrapping parts can be moved downwards along the transport elements 24. After having been positioned in this manner, the stack 17 is seized by the relevant gripping members 29 by activation from the control system and the guide means 38 pivot into a non-operative, substantially vertical position. Hereafter the above-described wrapping procedure is resumed and the third stack of cover parts 17 is transported via the transverse transport elements 23 to the stacking place above the finishing space 19.

Furthermore the control system of the wrapping unit is arranged such that the continuous transport element 14 of the pick-up element 3 automatically stops when it appears via the sensors in the wrapping space 16 that there is still present a bale 4 or a container, while it appears from signals of sensors on the pick-up member 3 that a bale 4 is entirely picked up from the ground. This has the advantage that during operation it will be possible for the machine to continue driving, also in situations in which e.g. the wrapping process is temporarily held up because of e.g. a necessary displacement of a stack of cover parts 17, or when it happens that two bales 4 have to be picked up from the field immediately after each other. Such an activation of the machine has also a relieving effect on the necessary alertness of the driver.

The invention is not restricted to the aforementioned description, but also relates to all the details of the drawings. Furthermore, the invention relates to all kinds of alternatives in the construction, of course, being within the scope of the following claims.

## Claims

1. A machine for wrapping bales (4), such as grass, straw or hay bales, said machine being provided with means (3, 20, 21, 26, 29, 33, 35) for placing a bale (4) into a container (8) or onto a container part (9), **characterized in that** the machine is provided with pick-up means (3) for picking up bales (4) from the ground, and **in that** the machine is provided with means (3, 20, 21, 26, 29, 33, 35, 22, 23, 24, 38) for transporting a stock of containers (17, 18) or parts thereof.

2. A machine as claimed in claim 1, **characterized in that** the machine is provided with means (3, 20, 21, 26, 29, 33, 35) for connecting, during operation, at least two parts (9, 10) of a container (8).

3. A machine as claimed in any one of the preceding claims, **characterized in that** the machine is provided with a wrapping device.

4. A machine as claimed in any one of the preceding claims, **characterized in that** the machine is provided with control and drive means (2, 6) so as to be self-driving.

5. A machine as claimed in any one of the preceding claims, **characterized in that** the pick-up means (3) are constituted by a rotating pick-up (11, 12, 14, 19).

6. A machine as claimed in any one of the preceding claims, **characterized in that** the machine is provided with transport devices (20 - 24, 38) for disposing the bale (4) of the pick-up on a bottom part 9 of a container (8).

7. A machine as claimed in any one of the preceding claims, **characterized in that** the machine is suitable for accommodating stacked parts (9, 10) of the containers (8).

8. A machine as claimed in any one of the preceding claims, **characterized in that** the machine is provided with an unstacking device for removing a container such as a container floor part (9, 10) from the lower side of a stack (17, 18).

9. A machine as claimed in any one of the preceding claims, **characterized in that** the machine is suitable for storing several bales (4) in a container (8).

10. A machine as claimed in any one of the preceding claims, **characterized in that** the unstacking device comprises automatically operated means (29), which connect to a side of a container (8).

11. A machine as claimed in any one of the preceding claims, **characterized in that** means (29) comprise an electromagnetic gripping element (30).

12. A machine as claimed in any one of the preceding claims, **characterized in that** a gripping element (30) comprises a stop pin.

13. A machine as claimed in any one of the preceding claims, **characterized in that** the machine comprises a control system including an electronic control unit, such as a microcomputer, for activating a wrapping device (20, 21, 26, 29, 33, 35), the pick-up member (3) and a discharge member (7).

14. A machine as claimed in any one of the preceding claims, **characterized in that** the control system is provided with sensors for detecting the position of a bale (4).

15. A machine as claimed in any one of the preceding claims, **characterized in that** the control system is provided with sensors for detecting the position of a container (8) or a wrapping part (9, 10).

16. A machine as claimed in any one of the preceding claims, **characterized in that** the control system is provided with a sequence switch system, preferably designed as a hydraulic one, for operating the means (29).

17. A machine as claimed in any one of the preceding claims, **characterized in that** the machine is provided with displacing means (20, 21, 23, 24, 29, 33, 35, 36, 38) for displacing a container (8) or a part (9, 10) thereof in the machine in the longitudinal, vertical and transverse direction.

18. A machine as claimed in any one of the preceding claims, **characterized in that** a container (8) closes off hermetically a bale (4).

19. A machine as claimed in any one of the preceding claims, **characterized in that** the machine is provided with a discharge member (7) by means of which a container (8) can be deposited on the ground.

20. A machine as claimed in any one of the preceding claims, **characterized in that** the machine is provided with a device for placing a bale (4) from the pick-up member (3) on the container (8) or in a part thereof.

21. A container for wrapping bales, such as grass, straw or hay bales, particularly suitable for being used in a machine as claimed in any one of the preceding claims, said container (8) being made of such material that said container (8) can be used several times, said container (8) consisting of at least two parts (9, 10) which parts (9, 10) are stackable, **characterized in that** a container (8) is provided with clamping means (39) for keeping together the parts (9, 10) of which the container (8) is composed, said clamping means constitute part of the material of the container (8).

22. A container as claimed in claim 21, **characterized in that** the container (8) comprises a cover provided with tightening means enabling at least an edge of said cover to be connected to an other container part.

23. A container as claimed in claim 21 or 22, **characterized in that** part of the container is made of flexible material.

24. A container as claimed in any one of claims 21 to 23, **characterized in that** a bottom part (9) of a container (8) is substantially flat.

25. A container as claimed in any one of claims 21 to 24, **characterized in that** a bottom part (9) of a container (8) is provided with openings for the purpose of being picked up by means of a gripper such as that of a forklift.

26. A container as claimed in any one of claims 21 to 25, **characterized in that** the container (8) entirely surrounds a bale (4).

27. A container as claimed in any one of claims 21 to 26, **characterized in that** connecting edges between the parts (9, 10) of the container (8) are provided with gasket material, e.g. a rubber strip.

28. A container as claimed in any one of claims 21 to 27, **characterized in that** the container (8) is capable of being closed off hermetically.

29. A container as claimed in any one of claims 21 to 28, **characterized in that** a wrapping part (9, 10) is provided with recesses (11).

30. A container as claimed in claim 29, **characterized in that** the recesses are provided in the longitudinal sides of a wrapping part (9, 10).

31. A container as claimed in any one of claims 21 to 30, **characterized in that** a wrapping part is provided with at least eight recesses (11).

32. A container as claimed in any one of claims 21 to 31, **characterized in that** a wrapping part (9, 10) is provided with a fitting edge (25).

33. A container as claimed in any one of claims 21 to 32, **characterized in that** a bottom part (9) and a cover part are capable of fitting to each other by means of an at least substantially V-shaped edge and groove portion.

34. A container as claimed in claim 33, **characterized in that** the edge and groove portions are included in a fitting edge (25).

35. A container as claimed in any one of claims 21 to 34, **characterized in that** a wrapping part (9, 10) is provided with a box-like edge (25).

36. A container as claimed in any one of claims 21 to 35, **characterized in that** at least one wrapping part (10) is trapezial in both directions.

37. A method of wrapping bales, such as grass, straw or hay bales, in which by means of positioning means (29, 33, 35) a cover part (10) of a container (8) is put around the bale (4) and on a bottom part (9), whereafter the container (8) is discharged from the machine via a discharge member (7), **characterized in that** a bale is picked up from the ground, transported in upward direction and laid down on or in a bottom part (9) of a container (8), placed on or in a wrapping space (16), said picked up bale (4) being transported to a position in the wrapping space (16) on a bottom part, in said position a cover part being disposed on the bottom part (9).

38. A method as claimed in claim 37, **characterized in that** by means of a fastening device the parts of a container are detachably interconnected.

39. A method as claimed in claim 37 or 38, **characterized in that** a wrapped bale (8) is laid down on the field by means of a discharge member (7).

40. A method as claimed in any one of the preceding claims 37 to 39, **characterized in that** a bale (4) positioned on a bottom part (9) and provided with a cover part (10) is displaced to a finishing space (19), in which the bottom part (9) and the cover part (10) are detachably interconnected.

41. A method as claimed in any one of claims 37 to 40, **characterized in that** a wrapped bale (8) is kept within the reach of the machine until this bale can be laid down together with one or more other wrapped bales (8).

42. A method as claimed in any one of claims 37 to 41, **characterized in that** the method is carried out by a self-driving machine, by means of which bales are picked up from the field during driving, are wrapped in the machine during driving and are laid down on the field during driving, wherein stacks of wrapping elements are transported in the machine and are taken out of the stack during driving by means of an unstacking device and are displaced into a wrapping space for the purpose of wrapping a bale.

## Patentansprüche

1. Maschine zum Verpacken von Ballen (4), wie z.B. Gras-, Stroh- oder Heuballen, wobei die Maschine Vorrichtungen (3, 20, 21, 26, 29, 33, 35) aufweist, um einen Ballen (4) in einen Behälter (8) ein- oder auf einen Behälterteil (9) aufzusetzen,
**dadurch gekennzeichnet, daß** die Maschine mit einer Aufsammelvorrichtung (3) zum Aufsammeln von Ballen (4) vom Boden versehen ist, und daß die Maschine Vorrichtungen (3, 20, 21, 26, 29, 33, 35, 22, 23, 24, 38) zum Transportieren eines Vorrates (17, 18) an Behältern oder Teilen derselben aufweist.

2. Maschine nach Anspruch 1,
**dadurch gekennzeichnet, daß** die Maschine mit Vorrichtungen (3, 20, 21, 26, 29, 33, 35) versehen ist, um im Betrieb mindestens zwei Teile (9, 10) eines Behälters (8) miteinander zu verbinden.

3. Maschine nach einem der vorhergehenden Ansprüche,
**dadurch gekennzeichnet, daß** die Maschine mit einer Verpackungsvorrichtung versehen ist.

4. Maschine nach einem der vorhergehenden Ansprüche,
**dadurch gekennzeichnet, daß** die Maschine mit Steuer- und Antriebsvorrichtungen (2, 6) versehen ist, so daß sie selbstfahrend ist.

5. Maschine nach einem der vorhergehenden Ansprüche,
**dadurch gekennzeichnet, daß** die Aufsammelvorrichtung (3) durch einen sich drehenden Aufsammler (11, 12, 14, 19) gebildet ist.

6. Maschine nach einem der vorhergehenden Ansprüche,
**dadurch gekennzeichnet, daß** die Maschine mit Transportvorrichtungen (20 bis 24, 38) versehen ist, um den Ballen (4) vom Aufsammler auf einen Bodenteil (9) eines Behälters (8) zu befördern.

7. Maschine nach einem der vorhergehenden Ansprüche,
**dadurch gekennzeichnet, daß** die Maschine geeignet ist, gestapelte Teile (9, 10) der Behälter (8) aufzunehmen.

8. Maschine nach einem der vorhergehenden Ansprüche,
**dadurch gekennzeichnet, daß** die Maschine mit einer Entstapelvorrichtung versehen ist, um einen Behälter, wie z. B. einen Behälterbodenteil (9, 10), von der Unterseite eines Stapels (17, 18) zu entnehmen.

9. Maschine nach einem der vorhergehenden Ansprüche,
**dadurch gekennzeichnet, daß** die Maschine geeignet ist, mehrere Ballen (4) in einem Behälter (8) anzuordnen.

10. Maschine nach einem der vorhergehenden Ansprüche,
**dadurch gekennzeichnet, daß** die Entstapelvorrichtung automatisch betätigte Vorrichtungen (29) umfaßt, die mit einer Seite eines Behälters (8) in Verbindung treten.

11. Maschine nach einem der vorhergehenden Ansprüche,
**dadurch gekennzeichnet, daß** die Vorrichtungen (29) ein elektromagnetisches Greifelement (30) umfassen.

12. Maschine nach einem der vorhergehenden Ansprüche,
**dadurch gekennzeichnet, daß** ein Greifelement (30) einen Sperrstift umfaßt.

13. Maschine nach einem der vorhergehenden Ansprüche,
**dadurch gekennzeichnet, daß** die Maschine ein Steuersystem mit einer elektronischen Steuereinheit, wie z. B. einem Mikrocomputer, umfaßt, um eine Verpackungsvorrichtung (20, 21, 26, 29, 33, 35), das Aufsammelglied (3) und ein Abladeglied (7) zu betätigen.

14. Maschine nach einem der vorhergehenden Ansprüche,
**dadurch gekennzeichnet, daß** das Steuersystem mit Sensoren zur Ermittlung der Position eines Ballens (4) versehen ist.

15. Maschine nach einem der vorhergehenden Ansprüche,
**dadurch gekennzeichnet, daß** das Steuersystem mit Sensoren zum Ermitteln der Position eines Behälters (8) oder eines Verpackungsteiles (9, 10) versehen ist.

16. Maschine nach einem der vorhergehenden Ansprüche,
**dadurch gekennzeichnet, daß** das Steuersystem zur Betätigung der Vorrichtungen (29) mit einem Folgeschaltersystem versehen ist, das vorzugsweise als hydraulisches System ausgeführt ist.

17. Maschine nach einem der vorhergehenden Ansprüche,
**dadurch gekennzeichnet, daß** die Maschine mit Beförderungsvorrichtungen (20, 21, 23, 24, 29, 33, 35, 36, 38) versehen ist, um einen Behälter (8) oder einen Teil (9, 10) desselben in der Maschine in Längsrichtung, in vertikaler Richtung und in Querrichtung zu befördern.

18. Maschine nach einem der vorhergehenden Ansprüche,
**dadurch gekennzeichnet, daß** ein Behälter (8) einen Ballen (4) luftdicht umschließt.

19. Maschine nach einem der vorhergehenden Ansprüche,
**dadurch gekennzeichnet, daß** die Maschine mit einem Abladeglied (7) versehen ist, mittels dessen ein Behälter (8) auf dem Boden abgelegt werden kann.

20. Maschine nach einem der vorhergehenden Ansprüche,
**dadurch gekennzeichnet, daß** die Maschine mit einer Vorrichtung versehen ist, um einen Ballen (4) vom Aufsammelglied (3) auf den Behälter (8) oder in einen Teil desselben zu befördern.

21. Behälter zum Verpacken von Ballen, wie z. B. Gras-, Stroh- oder Heuballen, insbesondere geeignet zur Verwendung in einer Maschine nach einem der vorhergehenden Ansprüche, wobei der Behälter (8) aus einem solchen Material hergestellt ist, daß der Behälter (8) mehrmals verwendet werden kann, wobei der Behälter (8) aus mindestens zwei Teilen (9, 10) besteht, wobei die Teile (9, 10) stapelbar sind,
**dadurch gekennzeichnet, daß** ein Behälter (8) mit Klemmvorrichtungen (39) zum Zusammenhalten der Teile (9, 10), aus denen der Behälter (8) besteht, versehen ist, wobei die Klemmvorrichtungen einen Teil des Materials des Behälters (8) bilden.

22. Behälter nach Anspruch 21,
**dadurch gekennzeichnet, daß** der Behälter (8) einen Deckel umfaßt, der mit Festspannvorrichtungen versehen ist, so daß zumindest ein Rand des Deckels mit einem anderen Behälterteil verbunden werden kann.

23. Behälter nach Anspruch 21 oder 22,
**dadurch gekennzeichnet, daß** ein Teil des Behälters aus flexiblem Material hergestellt ist.

24. Behälter nach einem der Ansprüche 21 bis 23,
**dadurch gekennzeichnet, daß** ein Bodenteil (9) eines Behälters (8) im wesentlichen flach ist.

25. Behälter nach einem der Ansprüche 21 bis 24,
**dadurch gekennzeichnet, daß** ein Bodenteil (9) eines Behälters (8) mit Öffnungen versehen ist, um mittels eines Greifers, wie z. B. des Greifers eines Gabelstaplers, aufgenommen zu werden.

26. Behälter nach einem der Ansprüche 21 bis 25,
**dadurch gekennzeichnet, daß** der Behälter (8) einen Ballen (4) vollständig umschließt.

27. Behälter nach einem der Ansprüche 21 bis 26,
**dadurch gekennzeichnet, daß** Verbindungsränder zwischen den Teilen (9, 10) des Behälters (8) mit Dichtungsmaterial, wie z. B. einem Gummistreifen, versehen sind.

28. Behälter nach einem der Ansprüche 21 bis 27,
**dadurch gekennzeichnet, daß** der Behälter (8) luftdicht verschließbar ist.

29. Behälter nach einem der Ansprüche 21 bis 28,
**dadurch gekennzeichnet, daß** ein Verpackungsteil (9, 10) mit Ausnehmungen (11) versehen ist.

30. Behälter nach Anspruch 29,
**dadurch gekennzeichnet, daß** die Ausnehmungen in den Längsseiten eines Verpackungsteiles (9, 10) ausgebildet sind.

31. Behälter nach einem der Ansprüche 21 bis 30,
**dadurch gekennzeichnet, daß** ein Verpackungsteil mit mindestens acht Ausnehmungen (11) versehen ist.

32. Behälter nach einem der Ansprüche 21 bis 31,
**dadurch gekennzeichnet, daß** ein Verpackungsteil (9, 10) mit einem Paßrand (25) versehen ist.

33. Behälter nach einem der Ansprüche 21 bis 32,
**dadurch gekennzeichnet, daß** ein Bodenteil (9) und ein Deckelteil mittels einer zumindest im wesentlichen V-förmigen Nut-Feder-Verbindung miteinander verbindbar sind.

34. Behälter nach Anspruch 33,
**dadurch gekennzeichnet, daß** die Wulst- und Nutabschnitte in einem Paßrand (25) enthalten sind.

35. Behälter nach einem der Ansprüche 21 bis 34,
**dadurch gekennzeichnet, daß** ein Verpackungsteil (9, 10) mit einem kastenförmigen Rand (25) versehen ist.

36. Behälter nach einem der Ansprüche 21 bis 35,
**dadurch gekennzeichnet, daß** mindestens ein Verpackungsteil (10) in beiden Richtungen trapezförmig ist.

37. Verfahren zum Verpacken von Ballen, wie z. B. Gras-, Stroh- oder Heuballen, bei dem mittels Positioniervorrichtungen (29, 33, 35) ein Deckelteil (10) eines Behälters (8) um den Ballen (4) herum und auf einem Bodenteil (9) angeordnet wird, wonach der Behälter (8) über ein Abladeglied (7) von der Maschine abgeladen wird,
**dadurch gekennzeichnet, daß** ein Ballen vom Boden aufgenommen, in Aufwärtsrichtung transportiert und auf oder in einen Bodenteil (9) eines Behälters (8) gelegt wird, der auf oder in einem Verpackungsraum (16) angeordnet ist, wobei der aufgenommene Ballen (4) in dem Verpackungsraum (16) in eine Position auf einem Bodenteil befördert wird, und wobei in dieser Position ein Deckelteil auf dem Bodenteil (9) angebracht wird.

38. Verfahren nach Anspruch 37,
**dadurch gekennzeichnet, daß** mittels einer Befestigungsvorrichtung die Teile eines Behälters lösbar miteinander verbunden werden.

39. Verfahren nach Anspruch 37 oder 38,
**dadurch gekennzeichnet, daß** ein verpackter Ballen (8) mittels eines Abladegliedes (7) auf dem Feld abgelegt wird.

40. Verfahren nach einem der vorhergehenden Ansprüche 37 bis 39,
**dadurch gekennzeichnet, daß** ein auf einem Bodenteil (9) positionierter und mit einem Deckelteil (10) versehener Ballen (4) in einen Fertigstellungsraum (19) befördert wird, in dem der Bodenteil (9) und der Deckelteil (10) lösbar miteinander verbunden werden.

41. Verfahren nach einem der Ansprüche 37 bis 40,
**dadurch gekennzeichnet, daß** ein verpackter Ballen (8) im Bereich der Maschine verbleibt, bis dieser Ballen zusammen mit einem oder mehreren anderen verpackten Ballen (8) abgelegt werden kann.

42. Verfahren nach einem der Ansprüche 37 bis 41,
**dadurch gekennzeichnet, daß** das Verfahren von einer selbstfahrenden Maschine durchgeführt wird, mittels der Ballen während der Fahrt vom Feld aufgenommen, während der Fahrt in der Maschine verpackt und während der Fahrt auf dem Feld abgelegt werden, wobei Stapel von Verpackungselementen in der Maschine transportiert und während der Fahrt mittels einer Entstapelvorrichtung aus dem Stapel entnommen und in einen Verpackungsraum befördert werden, um einen Ballen zu verpacken.

## Revendications

1. Machine pour envelopper des balles (4), telles que des balles d'herbe, de paille ou de foin, ladite machine étant équipée de moyens (3, 20, 21, 26, 29, 33, 35) pour placer une balle (4) dans un conteneur (8) ou sur une partie de conteneur (9), **caractérisée en ce que** la machine est équipée de moyens de ramassage (3) pour ramasser des balles (4) sur le sol, et **en ce que** la machine est équipée de moyens (3, 20, 21, 26, 29, 33, 35, 22, 23, 24, 38) pour transporter un stock de conteneurs (17, 18) ou des parties de ceux-ci.

2. Machine selon la revendication 1, **caractérisée en ce que** la machine est équipée de moyens (3, 20, 21, 26, 29, 33, 35) pour accoupler, pendant le fonctionnement, au moins deux parties (9, 10) d'un conteneur (8).

3. Machine selon l'une quelconque des revendications précédentes, **caractérisée en ce que** la machine est équipée d'un système d'emballage.

4. Machine selon l'une quelconque des revendications précédentes, **caractérisée en ce que** la machine est équipée de moyens de commande et d'entraînement (2, 6) afin d'être auto-entraînée.

5. Machine selon l'une quelconque des revendications précédentes, **caractérisée en ce que** les moyens de ramassage (3) sont constitués d'un ramasseur rotatif (11, 12, 14, 19).

6. Machine selon l'une quelconque des revendications précédentes, **caractérisée en ce que** la machine est équipée de dispositifs de transport (20 - 24, 38) pour disposer la balle (4) du ramasseur sur une partie inférieure (9) d'un conteneur (8).

7. Machine selon l'une quelconque des revendications précédentes, **caractérisée en ce que** la machine est conçue pour loger les parties empilées (9, 10) des conteneurs (8).

8. Machine selon l'une quelconque des revendications précédentes, **caractérisée en ce que** la machine est équipée d'un dispositif de dépilage pour retirer un conteneur, tel qu'une partie inférieure de conteneur (9, 10) de la partie inférieure d'une pile (17, 18).

9. Machine selon l'une quelconque des revendications précédentes, **caractérisée en ce que** la machine est adaptée au stockage de plusieurs balles (4) dans un conteneur (8).

10. Machine selon l'une quelconque des revendications précédentes, **caractérisée en ce que** le système de dépilage comprend des moyens de fonctionnement automatiques (29), qui sont connectés à un côté d'un conteneur (8).

11. Machine selon l'une quelconque des revendications précédentes, **caractérisée en ce que** les moyens (29) comprennent un élément de préhension électromagnétique (30).

12. Machine selon l'une quelconque des revendications précédentes, **caractérisée en ce qu'**un élément de préhension (30) comprend une goupille de blocage.

13. Machine selon l'une quelconque des revendications précédentes, **caractérisée en ce que** la machine comprend un système de commande équipé d'une unité de commande électronique, telle qu'un micro-ordinateur, pour activer un dispositif d'emballage (20, 21, 26, 29, 33, 35), l'élément de ramassage (3) et un élément de déchargement (7).

14. Machine selon l'une quelconque des revendications précédentes, **caractérisée en ce que** le système de commande est équipé de capteurs pour détecter la position d'une balle (4).

15. Machine selon l'une quelconque des revendications précédentes, **caractérisée en ce que** le système de commande est équipé de capteurs pour détecter la position d'un conteneur (8) ou d'une partie d'emballage (9, 10).

16. Machine selon l'une quelconque des revendications précédentes, **caractérisée en ce que** le système de commande est équipé d'un système de commutation séquentiel, de préférence conçu comme un système hydraulique, pour actionner les moyens (29).

17. Machine selon l'une quelconque des revendications précédentes, **caractérisée en ce que** la machine est équipée de moyens de déplacement (20, 21, 23, 24, 29, 33, 35, 36, 38) pour déplacer un conteneur (8) ou une partie (9, 10) de celui-ci dans la machine dans le sens longitudinal, vertical et transversal.

18. Machine selon l'une quelconque des revendications précédentes, **caractérisée en ce qu'**un conteneur (8) renferme hermétiquement une balle (4).

19. Machine selon l'une quelconque des revendications précédentes, **caractérisée en ce que** la machine est équipée d'un élément de déchargement (7) au moyen duquel un conteneur (8) peut être déposé sur le sol.

20. Machine selon l'une quelconque des revendications précédentes, **caractérisée en ce que** la machine est équipée d'un dispositif pour placer une balle (4) à partir de l'élément de ramassage (3) sur le conteneur (8) ou dans une partie de celui-ci.

21. Conteneur pour envelopper des balles, telles que des balles d'herbe, de paille ou de foin, tout particulièrement conçu pour être utilisé dans une machine selon l'une quelconque des revendications précédentes, ledit conteneur (8) étant constitué d'un matériau tel que ledit conteneur (8) puisse être utilisé plusieurs fois, ledit conteneur (8) comprenant au moins deux parties (9, 10), lesquelles parties (9, 10) peuvent s'empiler, **caractérisé en ce qu'**un conteneur (8) est équipé de moyens de serrage (39) pour maintenir ensemble les parties (9, 10) qui composent le conteneur (8), lesdits moyens de serrage font partie du matériel du conteneur (8).

22. Conteneur selon la revendication 21, **caractérisé en ce que** le conteneur (8) comprend un couvercle équipé de moyens de serrage permettant qu'au moins un bord dudit couvercle soit accouplé à une autre partie du conteneur.

23. Conteneur selon les revendications 21 ou 22, **caractérisé en ce qu'**une partie du conteneur est constituée d'un matériau souple.

24. Conteneur selon l'une quelconque des revendications 21 à 23, **caractérisé en ce qu'**une partie inférieure (9) d'un conteneur (8) est sensiblement plate.

25. Conteneur selon l'une quelconque des revendications 21 à 24, **caractérisé en ce qu'**une partie inférieure (9) d'un conteneur (8) est équipée d'ouvertures dans le but d'être ramassée au moyen d'un outil de préhension tel que celui d'un élévateur à fourche.

26. Conteneur selon l'une quelconque des revendications 21 à 25, **caractérisé en ce que** le conteneur (8) entoure complètement une balle (4).

27. Conteneur selon l'une quelconque des revendications 21 à 26, **caractérisé en ce que** les bords d'accouplement entre les parties (9, 10) du conteneur (8) sont équipés d'un joint d'étanchéité tel qu'une bande caoutchouc.

28. Conteneur selon l'une quelconque des revendications 21 à 27, **caractérisé en ce que** le conteneur (8) peut être fermé hermétiquement.

29. Conteneur selon l'une quelconque des revendications 21 à 28, **caractérisé en ce qu'**une partie d'emballage (9, 10) présente des creux (11).

30. Conteneur selon la revendication 29, **caractérisé en ce que** les creux sont situés sur les côtés longitudinaux d'une partie d'emballage (9, 10).

31. Conteneur selon l'une quelconque des revendications 21 à 30, **caractérisé en ce qu'**une partie d'emballage présente au moins huit creux (11).

32. Conteneur selon l'une quelconque des revendications 21 à 31, **caractérisé en ce qu'**une partie d'emballage (9, 10) comprend un bord de liaison (25).

33. Conteneur selon l'une quelconque des revendications 21 à 32, **caractérisé en ce qu'**une partie inférieure (9) et une partie couvercle puissent s'accoupler l'une l'autre au moyen d'une partie rainure et bord au moins sensiblement en forme de V.

34. Conteneur selon la revendication 33, **caractérisé en ce que** les parties bord et rainure sont comprises dans un bord de liaison (25).

35. Conteneur selon l'une quelconque des revendications 21 à 34, **caractérisé en ce qu'**une partie d'emballage (9, 10) présente d'un bord de forme rectangulaire (25).

36. Conteneur selon l'une quelconque des revendications 21 à 35, **caractérisé en ce qu'**au moins une partie d'emballage (10) est trapézoïde dans les deux sens.

37. Procédé pour envelopper des balles, telles que des balles d'herbe, de paille ou de foin, dans laquelle, à l'aide de moyens de positionnement (29, 33, 35), une partie couvercle (10) d'un conteneur (8) est placée autour de la balle (4) et sur une partie inférieure (9), après quoi le conteneur (8) est déchargé de la machine via un élément de déchargement (7), **caractérisé en ce qu'**une balle est ramassée sur le sol, transportée vers le haut et posée sur ou dans une partie inférieure (9) d'un conteneur (8), placée sur ou dans un espace d'emballage (16) ou à l'intérieur de celui-ci, ladite balle (4) ramassée étant transportée vers une position dans l'espace d'emballage (16) sur une partie inférieure, dans laquelle position, une partie couvercle est disposée sur la partie inférieure (9).

38. Procédé selon la revendication 37, **caractérisé en ce que** les parties d'un conteneur sont accouplées de façon détachable au moyen d'un dispositif de fixation.

39. Procédé selon la revendication 37 ou 38, **caractérisé en ce qu'**une balle enveloppée (8) est déposée sur le sol au moyen d'un élément de déchargement (7).

40. Procédé selon l'une quelconque des revendications 37 à 39, **caractérisée en ce qu'**une balle (4) positionné sur une partie inférieure (9) et comprenant une partie couvercle (10) est déplacée vers un espace terminal (19) dans lequel la partie inférieure (9) et la partie couvercle (10) sont accouplées de façon détachable.

41. Procédé selon l'une quelconque des revendications 37 à 40, **caractérisé en ce qu'**une balle enveloppée (8) reste à portée de la machine jusqu'à ce que cette balle puisse être déposée avec une ou plusieurs autres balles enveloppées (8).

42. Procédé selon l'une quelconque des revendications 37 à 41, **caractérisé en ce que** la méthode est effectuée par une machine automatique, au moyen de laquelle des balles sont ramassées dans le champ au passage de la machine, sont enveloppées dans la machine et sont déposées dans le champ pendant le déplacement, dans laquelle des piles d'éléments d'emballage sont transportées dans la machine et sont retirées de la pile pendant le déplacement au moyen d'un dispositif de dépilage et sont déplacées vers un espace d'emballage dans le but d'envelopper une balle.
